## Europäisches Patentamt
## European Patent Office
## Office européen des brevets

(11) Veröffentlichungsnummer: **0 224 781 B1**

(12) **EUROPÄISCHE PATENTSCHRIFT**

(45) Veröffentlichungstag der Patentschrift: **14.08.91**

(51) Int. Cl.5: **G01N 9/24**, G01N 23/08, G01N 23/10

(21) Anmeldenummer: **86115883.0**

(22) Anmeldetag: **15.11.86**

(54) **Verfahren zur Messung der Dichte in einer Sektion eines Formkörpers aus Pulver.**

(30) Priorität: **06.12.85 DE 3543177**

(43) Veröffentlichungstag der Anmeldung:
**10.06.87 Patentblatt 87/24**

(45) Bekanntmachung des Hinweises auf die
Patenterteilung:
**14.08.91 Patentblatt 91/33**

(84) Benannte Vertragsstaaten:
**DE FR GB IT**

(56) Entgegenhaltungen:
**US-A- 2 346 486**
**US-A- 3 531 643**

**IBM TECHNICAL DISCLOSURE BULLETIN,
Band 13, Nr. 6, November 1970, Seite 1550,
New York, US; J.E. HOEL et al.: "Sintered
metals denisty gauge"**

**INTERNATIONAL JOURNAL OF APPLIED RA-
DIATION AND ISOTOPES, Band 34, Nr. 1,
Januar 1983, Seiten 37-44, Pergamon Press
Ltd, Oxford, GB; R.A. FOOKES et al.:
"Feasibility studies of low energy gammaray techniques for on-line determination of**

ash content of coal on conveyors"

**PATENT ABSTRACTS OF JAPAN, Band 7, Nr.
224 (P-227)[1369], 5. Oktober 1983 & JP-A-58
115 351**

(73) Patentinhaber: **Sintermetallwerk Krebsöge
GmbH
Postfach 51 00
W-5608 Radevormwald(DE)**

(72) Erfinder: **Arnhold, Volker, Dr. Dipl.-Phys.
Kottsiepen 62
W-5600 Wuppertal 21(DE)**
Erfinder: **Dirkes, Heinz, Dr. Dipl.-Phys.
Hermann-Löns-Weg 30
W-4404 Telgte(DE)**

(74) Vertreter: **Andrejewski, Walter
Theaterplatz 3 Postfach 100254
W-4300 Essen 1(DE)**

**Beschreibung**

Die Erfindung bezieht sich gattungsgemäß auf ein Verfahren zur Messung der Dichte $\rho_F$ in einer Sektion eines Formkörpers der Sektionshöhe $x_F$ aus gepreßtem oder gesintertem Pulver, wobei die Sektionshöhe $x_F$ von Gammastrahlenquanten durchstrahlt wird und dabei der Formkörper von $N_0$ Gammastrahlenquanten beaufschlagt sowie die Anzahl N der auf der anderen Seite des Formkörpers austretenden Gammastrahlenquanten gemessen wird, wobei für diese Gammastrahlenquanten der Zusammenhang des Absorptionsgesetzes

$$N = N_0 \exp(-\mu\rho x)$$

mit $\mu$:Absorptionskoeffizient, $\rho$:Dichte, x:Durchstrahlungsdicke, in einem Rechner ausgewertet wird und dazu die gemessenen Größen N und $N_0$ sowie die ebenfalls gemessene Sektionshöhe $x_F$ in den Rechner eingeführt werden. - Pulver bezeichnet im Rahmen der Erfindung auch Mehrkomponenten-Pulver. Es kann sich dabei um Metallpulver oder um andere Pulver, beispielsweise um keramische Pulver, handeln. Die Erfindung bezieht sich fernerhin auf eine Anlage zur Durchführung eines solchen Verfahrens. Der Ausdruck Gammastrahlen umfaßt im Rahmen der Erfindung auch Röntgenstrahlen.

Derartige Verfahren sind z.B. bekannt aus IBM Technical Disclosure Bulletin, Band 13, Nr.6, November 1970, Seite 1550 und US-A-3 531 643.

Die Messung der Dichte von Formkörpern aus gepreßten oder gesinterten Pulvern erfolgt bisher hydrostatisch nach dem Archimedischen Prinzip. Das ist umständlich und muß im Labor erfolgen. In einer laufenden Fertigung kann deshalb die Dichte der Formkörper im allgemeinen nur stichprobenweise kontrolliert werden. Eine Integration mit einer rechnergestützten Fertigung oder Qualitätskontrolle ist kaum möglich.

Die zur Gattung gehörenden meßtechnischen Maßnahmen führen bei Formkörpern aus kompaktem Material zu ausreichend genauen Meßergebnissen und sind insoweit bewährt. In bezug auf die Messung der Dichte eines Formkörpers aus gepreßtem oder aus gesintertem. Pulver sind (aus der Praxis) Untersuchungen bekannt, die häufig nicht zu ausreichend genauen Meßergebnissen führen.

Der Erfindung liegt die Aufgabe zugrunde, das gattungsgemäße Verfahren so zu führen, daß mit hoher Meßgenauigkeit die Dichte der Formkörpers ermittelt werden kann. Es versteht sich, daß die so ermittelten Meßwerte ohne weiteres eine Integration mit einer rechnergestützten Fertigung oder Qualitätskontrolle zulassen, wo die Dichte der hergestellten Formkörper in allen oder ausgewählten Sektionen des Formkörpers kontrolliert werden muß.

Zur Lösung dieser Aufgabe lehrt die Erfindung, daß die Dichte $\rho_M$ und Absorptions koeffizient $\mu_M$ des kompakten Materials, aus dem das Pulver besteht, ermittelt und in den Rechner eingeführt werden, daß der Rechner so gesteuert wird, daß in dem Rechner aus N und $N_0$ sowie aus $\rho_M$ und $\mu_M$ der Formel

$$x_M = \frac{1}{\mu_M\rho_M} \ln(N_0/N)$$

die Höhe $x_M$ eines Modellkörpers ermittelt wird, der aus dem kompakten Material mit dem Absorptionskoeffizient $\mu_M$, der Dichte $\rho_M$ und Höhe $x_M$ sowie einem Hohlraum der Höhe $(x_F-x_M)$ zusammengesetzt ist und daß der Rechner fernerhin so geschaltet wird, daß in dem Rechner die Beziehung $\rho_F x_F = \rho_M x_M$ ausgewertet und nach der Formel

$$\rho_F = \frac{1}{x_F\mu_M} \ln(N_0/N)$$

die Dichte des Formkörpers bestimmt wird. - Die Erfindung beruht auf der Erkenntnis, daß ein Formkörper aus gepreßtem oder aus gesintertem Metallpulver im Rahmen des gattungsgemäßen Verfahrens mit hoher Genauigkeit durch ein Modell approximierbar ist, welches eine mit der Formkörperhöhe $x_F$ übereinstimmende Höhe aufweist, jedoch aus einem Höhenabschnitt $x_M$ des kompakten Materials und einem Hohlraum der Höhe $(x_F-x_M)$ besteht. Dieses Modell ist dem Rechner durch das Programm einverleibt. Zwar ist die Höhe $x_M$ dieses Modells unbekannt, diese Unbekannte fällt jedoch bei dem erfindungsgemäßen Verfahren auf elegante Weise heraus. Es versteht sich, daß im Rahmen des erfindungsgemäßen Verfahrens die Strahlenquelle der Gammastrahlenquanten sowie der Detektor einen festen Abstand aufweisen. im Rahmen des erfindungsgemäßen Verfahrens kann der Formkörper aus einem Pulver eines einzigen Materials oder aus einem Mehrkomponenten-Pulver zusammengesetzt sein. Handelt es sich um ein Pulver aus einem einzigen Material, so beziehen sich die in das erfindungsgemäße Verfahren eingehenden, mit M identifizierten Größen auf dieses einzige Material. Handelt es sich um einen Formkörper aus einem Mehrkomponenten-Pulver, so lehrt die Erfindung, daß für den Absorptionskoeffizienten mit der Größe $\mu_M = \sum_i C_i\mu_i$, für die Dichte des kompakten Materials mit der Größe $\rho_M = \sum_i C_i\rho_i$ gearbeitet wird, und zwar mit

$C_i$ : Massenanteil der Komponente i,

$\mu_i$ : Absorptionskoeffiezient der Komponente i,

$\rho_i$ : Dichte der Komponente i,

in dem Mehrkomponenten-Pulver des Formkörpers. Es versteht sich, daß bei der Auswertung alle Zählraten, wie bei Messung von Gammastrahlenquanten und insbes. bei Absorptionsmessungen üblich, mit einer Totzeitkorrektur sowie mit einer Untergrundkorrektur versehen werden können. Der Einfluß von Untergrundimpulsen auf die Anzahl $N$ der Gammastrahlenquanten kann durch eine Bleiabschirmung auf der Empfangsseite der Gammastrahlenquanten unterdrückt werden. Es empfiehlt sich, vor jeder Messung die Anzahl $N_0$ der den Formkörper beaufschlagenden Gammstrahlenquanten neu zu bestimmen. Eine bevorzugte Ausführungsform der Efindung ist dadurch gekennzeichnet, daß mit mehreren Gammastrahlenquellen gearbeitet wird und nach Maßgabe der Sektionshöhe $x_F$, der Dichte $\rho_M$ kompakten Materials und dem Absorptionskoeffizienten $\mu_M$ des kompakten Materials unterschiedliche Gammastrahlenquellen eingesetzt werden, um den Meßfehler möglichst gering zu halten. Geeignete Gammastrahlenquellen lassen sich durch Versuche auswählen.

Gegenstand der Erfindung ist auch eine Anlage für die Durchführung des erfindungsgemäßen Verfahrens. Insoweit berücksichtigt die Erfindung, daß je nach Sektionshöhe $x_F$ des Formkörpers, je nach Dichte $\rho_M$ des kompakten Materials sowie je nach Absorptionskoeffizienten $\mu_M$ des kompakten Materials zum Zwecke der Fehlerminimierung tunlichst mit unterschiedlichen Gammstrahlenquellen gearbeitet wird, z. B. mit Gammastrahlen hoher Quantenenergie bei zu untersuchenden Formkörpern großer Sektionshöhe und großer Dichte bzw. hohem Absorptionskoeffizient des kompakten Materials. Die Sektionshöhe $x_F$, für die der Meßfehler minimal ist, ist umgekehrt proportional der Dichte bzw. dem Absorptionskoeffizienten des kompakten Materials, $x_F$ (fehlerminimiert) $= 2/\mu_M \rho_M$. Insoweit der Sektionshöhe $x_F$ zugeordnete Gammastrahlenquellen lassen sich aus der Menge der auf dem Markt befindlichen oder kerntechnisch herstellbaren Gammastrahlenquellen leicht auswählen. Für Formkörper aus Metallpulver seien beispielsweise genannt: Co-57 für eine Sektionshöhe im Bereich 10 mm, Am-241 für eine Sektionshöhe von etwa 2,5 mm, Cs-137 für eine Sektionshöhe von über 30 mm. In anlagetechnischer Hinsicht geht die Erfindung aus von einer Anlage mit Durchstrahlungsapparatur, die eine Durchstrahlungskammer mit Durchstrahlungskanal, Kollimator, Aperturblende und Formkörperaufnahme aufweist, mit einer Mehrzahl von vorgeschalteten, in einem Gammastrahlenquellenkommutator angeordneten Gammastrahlenquellen und nachgeschaltetem Detektor, wobei der zu messende Formkörper auf einem verstellbaren Formkörperschlitten angeordnet und damit in die Durchstrahlungskammer ein- und ausführbar ist, wobei für spezielle Durchstrahlungsaufgaben unterschiedliche Gammastrahlenquellen dem Durchstrahlungskanal zugeordnet sind und wobei an den Detektor eine Zählelektronik sowie an dieses ein Rechner angeschlossen ist. Der Durchmesser des Durchstrahlungskanals liegt im Bereich zwischen 2,5 bis 10 mm, vorzugsweise bei 4 mm oder 8 mm. Es versteht sich, daß in einem Fertigungsbetrieb, in dem regelmäßig eine vorgegebene Anzahl von Pulver und Pulvermischungen zu Formkörpern geformt wird, die Pulver bzw. die Pulvermischungen normiert und die zugeordneten Werte des Absorptionskoeffizienten $\mu_M$ sowie der Dichte $\rho_M$ des kompakten Materials in dem Rechner gespeichert und bereitgehalten werden, also nicht bei jeder Dichtmessung neu ermittelt werden.

Die erreichten Vorteile sind darin zu sehen, daß erfindungsgemäß mit sehr hoher Meßgenauigkeit die Dichte von Formkörpern aus Pulver ermittelt werden kann. Dabei ist es gleichgültig, ob es sich um Metall, um Formkörper aus Metallpulver oder um solche aus einem anderen Pulver, beispielsweise um keramische Formkörper handelt. Die so ermittelten Meßwerte lassen ohne weiteres eine Integration mit einer rechnergestützten Fertigung oder Qualitätskontrolle zu.

Im folgenden wird die Erfindung anhand einer lediglich ein Ausführungsbeispiel darstellenden Zeichnung ausführlicher erläutert. Es zeigen

Fig. 1     eine schematische Darstellung einer Anlage zur Durchführung des erfindungsgemäßen Verfahrens,

Fig. 2     ein Verfahrensschema,

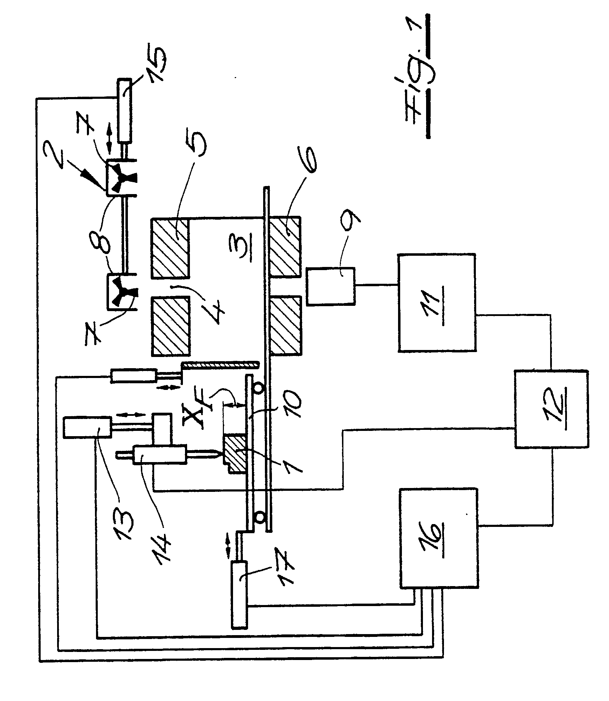

Die in der Fig. 1 dargestellte Anlage dient zur Messung der Dichte in einer Sektion eines Formkörpers 1 vorgegebener Sektionshöhe $x_F$, wobei der Formkörper 1 aus gepreßtem oder gesintertem Pulver besteht. Zum grundsätzlichen Aufbau der Anlage gehören zunächst

eine Durchstrahlungsapparatur 2, die eine Durchstrahlungskammer 3 mit Durchstrahlungskanal 4, Kollimator 5 und Aperturblende 6 und mit Formkörperaufnahme aufweist. Vorgeschaltet ist eine Mehrzahl von Gammastrahlenquellen 7, die in einem Gammastrahlenquellenkommutator 8 angeordnet sind. Nachgeschaltet ist ein Detektor 9.

Der zu messende Formkörper 1 ist auf einem verstellbaren Formkörperschlitten 10 angeordnet und damit in die Durchstrahlungskammer 3 einführbar sowie aus dieser herausnehmbar. Für spezielle Durchstrahlungsaufgaben können dem Durchstrahlungskanal 4 unterschiedliche Gammastrahlenquellen 7 zugeordnet werden. An den Detektor 9 ist eine Zählelektronik 11 für die Gammastrahlenquanten angeschlossen und mit dieser ist ein Rechner 12 verbunden. Der Rechner 12 ist in besonderer Weise programmiert, wie eingangs erläutert wurde. Vor der Durchstrahlungskammer 3 ist eine Sektionshöhenmeßvorrichtung 13 angeordnet, mit der der auf dem Formkörperschlitten 10 befindliche Formkörper 1 sektionsweise vermeßbar ist. Der Höhenmeßwertgeber 14 dieser Sektionshöhenmeßvorrichtung 13 ist mit dem Rechner 12 verbunden. Der Rechner 12 ordnet im Zusammenhang mit der Messung der Sektionshöhe $x_F$ unter Berücksichtigung der Dichte $\rho_F$ sowie des Absorptionskoeffizienten $\mu_M$ des kompakten Materials jeder Sektionshöhe $x_F$ eine Gammastrahlenquelle 7 zu. Außerdem betätigt der Rechner 12 den mit einem Stelltrieb 15 versehenen Gammastrahlenkommutator 8 über eine Steuereinrichtung 16 entsprechend. Mit dem Rechner 12 ist außerdem über die Steuereinrichtung 16 und einen weiteren Stelltrieb 17 der Formkörperschlitten 10 nach jeder Sektionshöhenmessung sektionskongruent aus der Vermessungsstellung in die Durchstrahlungskammer 3 einführbar. Das bedeutet, daß die Durchstrahlung und damit die Dichtenmessung genau an der Stelle erfolgt, an der zuvor vor der Durchstrahlungskammer 3 die Sektionshöhe $x_F$ gemessen worden ist.

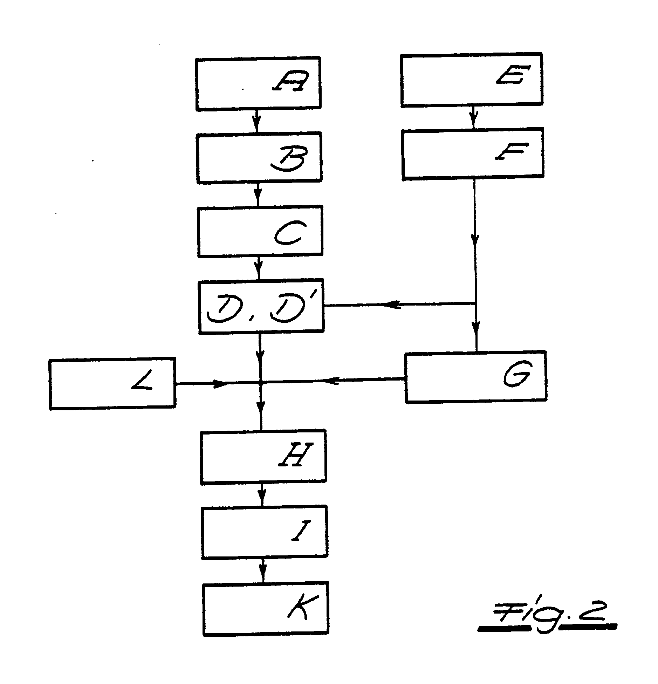

Die Fig. 2 erläutert die einzelnen Verfahrensstufen, wenn mit einer Anlage des Aufbaus der Fig. 1 gearbeitet wird und diese Anlage von einer Bedienungsperson betätigt wird. Man erkennt in der Fig. 1 zunächst eine Folge von Verfahrensstufen A bis D. In der Verfahrensstufe A teilt die Bedienungsperson dem Rechner mit, aus welchem normierten Pulver oder aus welcher normierter Pulvermischung der zu vermessende Formkörper 1 besteht. In der Verfahrensstufe B ermittelt der Rechner aufgrund der Eingabe der Bedienungsperson die chemische Zusammensetzung des normierten Pulvers. Im Anschluß daran erfolgt in der Verfahrensstufe C die Bestimmung des Absorptionskoeffizienten $\mu_M$ sowie der Dichte $\rho_M$ nach Maßgabe der gespeicherten Werte oder, bei Pulvermischungen, nach Maßgabe des im Anspruch 2 erläuterten Verfahrens. Nunmehr wird in der Verfahrensstufe D, D' die Gammastrahlenquelle 7 ausgewählt, die unter Berücksichtigung des Absorptionskoeffizienten $\mu_M$ und der Dichte $\rho_M$ sowie unter Berücksichtigung der Sektionshöhe $x_F$ besonders geeignet ist. Dazu wurden besondere Verfahrensstufen, gleichsam parallel zu den beschriebenen durchgeführt. In der Verfahrensstufe E erfolgte die Positionierung des Formkörpers 1 auf dem Formkörperschlitten 10, in der Verfahrensstufe F die Messung der Sektionshöhe $x_F$. Der Meßwert wird in die Verfahrensstufen D, D' eingeführt, die aus diesem Grunde doppelt indiziert wurden. Es versteht sich, daß im Anschluß daran in der Verfahrensstufe G der Formkörperschlitten 10 in die Durchstrahlungskammer 3 eingeführt wird, und zwar so, daß in bezug auf die Meßstelle für die Sektionshöhe $x_F$ der Formkörper 1 kongruent unter dem Durchstrahlungskanal 4 liegt. Nunmehr oder gleichzeitig wird in der Verfahrensstufe H die ausgewählte Gammastrahlenquelle 7 positioniert. In der Verfahrensstufe I erfolgt die Absorptionsmessung, bei der die vorstehend erläuterte Größe N gemessen wird. Im Anschluß daran ermittelt der Rechner 12 in der Verfahrensstufe K die gesuchte Dichte $\rho_F$ nach Maßgabe der eingangs beschriebenen Operation. Es versteht sich, daß in einer besonderen Verfahrensstufe L zuvor die Größe $N_o$ ermittelt und/oder eine Eichung durchgeführt werden kann.

## Patentansprüche

1. Verfahren zur Messung der Dichte $\rho_F$ in einer Sektion eines Formkörpers der Sektionshöhe $x_F$ aus gepreßtem oder gesintertem Pulver, wobei die Sektionshöhe $x_F$ von Gammastrahlenquanten durchstrahlt wird und dabei der Formkörper von $N_o$ Gammastrahlenquanten beaufschlagt sowie die Anzahl N der auf der anderen Seite des Formkörpers austretenden Gammastrahlenquanten gemessen wird, wobei für diese Gammastrahlenquanten der Zusammenhang des Absorptionsgesetzes

$$N = N_o \exp(-\mu \rho x)$$

mit $\mu$: Absorptionskoeffizient, $\rho$: Dichte, x: Durchstrahlungsdicke, in einen Rechner ausgewertet wird und dazu die gemessenen Größen N und $N_o$ sowie die ebenfalls gemessene Sektionshöhe $x_F$ in den Rechner eingeführt werden, **dadurch gekennzeichnet,** daß die Dichte $\rho_M$ und Absorptionskoeffizient $\mu_M$ des kompakten Materials, aus dem das Pulver besteht, ermittelt und in den Rechner eingeführt werden, daß der Rechner so gesteuert wird, daß in dem Rechner aus N und $N_o$ sowie aus $\rho_M$ und $\mu_M$ nach der Formel

$$x_M = \frac{1}{\mu_M \rho_M} \ln(N_o/N)$$

die Höhe $x_M$ eines Modellkörpers ermittelt wird, der aus dem kompakten Material mit dem Absorptionskoeffizient $\mu_M$, der Dichte $\rho_M$ und Höhe $x_M$ sowie einen Hohlraum der Höhe ($x_F$-$x_M$) zusammengesetzt ist und daß der Rechner fernerhin so geschaltet wird, daß in dem Rechner die Beziehung $\rho_F x_F = \rho_M x_M$ ausgewertet und nach der Formel

$$\varphi_F = \frac{1}{x_F \mu_M} \ln(N_0/N)$$

die Dichte des Formkörpers bestimmt wird.

2. Verfahren nach Anspruch 1 in der Ausführungsform für einen Formkörper, der aus einem Mehrkomponenten-Pulver aus mehreren Elementen i zusammengesetzt ist, dadurch gekennzeichnet, daß für den Absorptionskoeffizienten mit der Größe $\mu_M = \sum_i C_i \mu_i$, für die Dichte des kompakten Materials mit der Größe $\rho_M = \sum_i C_i \rho_i$ gearbeitet wird, und zwar mit

$C_i$ : Massenanteil der Komponente i,

$\mu_i$ : Absorptionskoeffizient der Komponente i,

$\rho_i$ : Dichte der Komponente i, in dem Mehrkomponenten-Pulver des Formkörpers.

3. Verfahren nach einem der Ansprüche 1 oder 2, dadurch gekennzeichnet, daß ein Einfluß von Untergrundimpulsen auf die Anzahl N der Gammastrahlenquanten durch eine Bleiabschirmung auf der Empfängerseite der Gammastrahlenquanten unterdrückt wird.

4. Verfahren nach einem der Ansprüche 1 bis 3, dadurch gekennzeichnet, daß mit mehreren Gammastrahlenquellen gearbeitet wird und nach Maßgabe der Sektionshöhe $x_F$, der Dichte $\rho_M$ des kompakten Materials und des Absorptionskoeffizienten $\mu_M$ unterschiedliche Gammastrahlenquellen eingesetzt werden.

5. Anlage für die Durchführung des Verfahrens nach Anspruch 4, - mit

Durchstrahlungsapparatur (2), die eine Durchstrahlungskammer (3) mit Durchstrahlungskanal (4), Kollimator (5), Aperturblende (6) und Formkörperaufnahme aufweist, mit einer Mehrzahl von vorgeschalteten, in einem Gammastrahlenquellenkommutator angeordneten Gammastrahlenquellen (7) und nachgeschaltetem Detektor (9), wobei der zu messende Formkörper auf einem verstellbaren Formkörperschlitten (10) angeordnet und damit in die Durchstrahlungskammer ein- und ausführbar ist, wobei für spezielle Durchstrahlungsaufgaben unterschiedliche Gammastrahlenquellen dem Durchstrahlungskanal zugeordnet sind und wobei an den Detektor eine Zählelektronik (11) sowie an diese ein Rechner (12) angeschlossen ist, **dadurch gekennzeichnet,** daß der Rechner (12) für die Rechenoperationen der Ansprüche 1 oder 2 programmiert ist, daß vor der Durchstrahlungskammer (3) eine Sektionshöhenmeßvorrichtung (13) angeordnet ist, mit der der auf dem Formkörperschlitten (10) befindliche Formkörper (1) sektionsweise vermeßbar ist und deren Höhenmeßwertgeber (14) mit dem Rechner (12) verbunden ist, daß der Rechner (12) im Zusammenhang mit der Messung der Sektionshöhe $x_F$ unter Berücksichtigung der Dichte $\rho_M$ sowie die Absorptionskoeffizienten $\mu_M$ des kompakten Materials jeder Sektionshöhe $x_F$ eine Gammastrahlenquelle (7) zuordnet sowie den mit einem Stelltrieb (15) versehenen Gammastrahlenquellenkommutator (18) über eine Steuereinrichtung (16) entsprechend betätigt, und daß mit dem Rechner (12) außerdem über die Steuereinrichtung (16) und einen weiteren Stelltrieb (17) der Formkörperschlitten (10) nach Sektionshöhenmessung sektionskongruent aus der Vermessungsstellung in die Durchstrahlungskammer (3) einführbar ist.

**Claims**

1. A method for measurement of the density $\rho_F$ in a section of a moulded body of sectional height $x_F$ of pressed or sintered powder in which the sectional height $x_F$ is irradiated by quanta of gamma rays and thereby the moulded body is impinged upon by $N_0$ gamma ray quanta and the number N of gamma ray quanta emerging at the other side of the moulded body is measured, in which the relationship of the absorption law

$$N = N_0 \exp(-\mu \rho x)$$

where $\mu$ = absorption coefficient, $\rho$ = density and $x$ = irradiation thickness, is evaluated for these gamma ray quanta in a computer, and for this purpose the measured values N and $N_0$ and the sectional height $x_F$, which is also measured, are entered into the computer, *characterized in that* the density $\rho_M$ and the absorption coefficient $\mu_M$ of the solid material, of which the powder consists, are determined and introduced into the computer, that the computer is so programmed that in it from N and $N_0$ and from $\rho_M$ and $\mu_M$ in accordance with the formula

$$x_M = \frac{1}{\mu_M \rho_M} \ln(N_0/N)$$

the height $x_M$ of a theoretical body is determined that is compounded from the solid material with absorption coefficient $\mu_M$, density $\rho_M$ and height $x_M$ and a cavity of height ($x_F$ - $x_M$), and that the computer is additionally so programmed that in it the relationship $\rho_F x_F = \rho_M x_M$ is evaluated and the density of the moulded body is determined from the formula

$$\rho_F = \frac{1}{x_F \, \mu_M} \ln \, (N_o /N)$$

2. A method according to Claim 1 in the form of performance for a moulded body that is compounded from a plural-component powder of several elements i, *characterized in that* the value $\mu_M = \Sigma_i C_i \mu_i$ is used for the absorption coefficient, and the value $\rho_M = \Sigma_i C_i \rho_i$ is used for the density of the solid material, this being with

$C_i$ =    proportion by weight of component i,

$\mu_i$ =    absorption coefficient of component i,

$\rho_i$ =    density of component i in the plural-component powder of the moulded body.

3. A method according to one of Claims 1 or 2, *characterized in that* an effect of background impulses on the number N of gamma ray quanta is suppressed by lead screening on the receiving side of the gamma ray quanta.

4. A method according to one of Claims 1 to 3, *characterized in that* it is operated with various sources of gamma rays, and that different sources of gamma rays are used according to the sectional height $x_F$, the density $\rho_M$ of the solid material and the absorption coefficient $\mu_M$.

5. An installation for performing the method according to Claim 4, with
an irradiation equipment (2) that possesses an irradiation chamber (3) with irradiation channel (4), collimator (5), aperture diaphragm (6) and a moulded body receiver, preceded by a plurality of sources of gamma rays (7) located in a gamma ray source commutator and followed by a detector (9), in which the moulded body that is to be measured is located on a movable moulded body carriage (10) and thereby can be moved into and out of the irradiation chamber, in which for special irradiation requirements different gamma ray sources are associated with the irradiation channel and in which an electronic counter (11) is connected to the detector and a computer (12) is connected to the electronic counter, *characterized in that* the computer (12) is programmed for the calculation operations of Claims 1 and 2, that a sectional height measuring equipment (13) is located before the irradiation chamber (3), by which the moulded body (1) located on the moulded body carriage (10) can be sectionally measured, its height-measuring probe (14) being connected to the computer (12), that in connection with the measurement of sectional height $x_F$ and taking account of the density $\rho_M$ and the absorption coefficient $\mu_M$ of the solid material the computer (12) assigns to each sectional height $x_F$ a gamma ray source (7) and appropriately actuates via control equipment (16) the gamma ray source commutator (18) equipped with a positioning drive (15), and that by the computer (12) also via control equipment (16) and a further positioning drive (17) the moulded body carriage (10) after measurement of the sectional height can be introduced in sectionally congruent position from the point of measurement into the irradiation chamber (3).

## Revendications

1. Procédé pour mesurer la densité $\rho_F$ dans une section de hauteur $x_F$ d'un corps moulé formé d'une poudre pressée et/ou frittée, selon lequel on irradie la section sur sa hauteur $x_F$ par des quanta de rayonnement gamma et qu'on applique ensuite au corps moulé $N_o$ quanta de rayonnement gamma et qu'on mesure le nombre M des quanta de rayonnement gamma, qui sortent de l'autre côté du corps moulé, et selon lequel, pour ces quanta de rayonnement gamma, on évalue dans un calculateur la relation relative à la loi d'absorption

$$N = N_o \exp \, (-\mu \rho x)$$

avec $\mu$: coefficient d'absorption, $\rho$: densité, x: épaisseur d'irradiation, et, à cet effet, on introduit dans le calculateur les grandeurs mesurées N et $N_o$ ainsi que la hauteur également mesurée $x_F$ de la section, caractérisé en ce qu'on détermine la densité $\rho_M$ et le coefficient d'absorption $\mu_M$ du matériau compact, dont est constituée la poudre, et qu'on les introduit dans le calculateur, et qu'on commande le calculateur de telle sorte que dans ce dernier est déterminée, à partir de N et $N_o$ ainsi qu'à

partir de $\rho_M$ et de $\mu_M$, conformément à la formule

$$x_M = \frac{1}{\mu_M \rho_M} \ln(N_O/N)$$

la hauteur $x_M$ d'un corps modèle, qui est constitué par le matériau compact possédant le coefficient d'absorption $\mu_M$, la densité $\rho_M$ et la hauteur $x_M$ ainsi qu'une cavité ayant pour hauteur $(x_F - x_M)$, et qu'on commande en outre le calculateur de manière qu'il évalue la relation $\rho_F x_F = \rho_M x_M$ et que la densité du corps moulé est déterminée selon la formule

$$\rho_F = \frac{1}{x_F \mu_F} \ln(N_O/N).$$

2. Procédé selon la revendication 1, dans son mode de mise en oeuvre pour un corps moulé qui est constitué par une poudre à constituants multiples, formée de plusieurs éléments i, caractérisé en ce que, pour le coefficient d'absorption, on travaille avec la grandeur $\mu M = \sum_i C_i \mu_i$ et que pour la densité du matériau compact on travaille avec la grandeur $\rho M = \Sigma C_i \rho_i$, avec

$\quad C_i :$ pourcentage de masse du constituant i,

$\quad \mu_i :$ coefficient d'absorption du composant i,

$\quad \rho_i :$ densité du constituant i dans la poudre à constituants multiples du corps moulé.

3. Procédé selon l'une des revendications 1 ou 2, caractérisé en ce que l'influence d'impulsions du fond sur le nombre N de quanta de rayonnement gamma est supprimée par un blindage en plomb situé sur le côté du récepteur des quanta de rayonnement gamma.

4. Procédé selon l'une des revendications 1 à 3, caractérisé en ce qu'on travaille avec plusieurs sources de rayonnement gamma et qu'on utilise différentes sources de rayonnement gamma en fonction de la hauteur $x_F$ de la section, de la densité $\rho_M$ du matériau compact et du coefficient d'absorption $\mu_M$.

5. Installation pour la mise en oeuvre du procédé selon la revendication 4, comportant un dispositif d'irradiation (2), qui comporte une chambre d'irradiation (3) équipée d'un canal d'irradiation (4), d'un collimateur (5), d'un diaphragme (6) et d'un réceptacle pour le corps moulé, avec une multiplicité de sources de rayonnement gamma (7) installées en amont et disposées dans un commutateur des sources de rayonnement gamma, et un détecteur (9) branché en aval,

et dans laquelle le corps moulé à mesurer est disposé sur un chariot mobile (10) de support du corps moulé et, à l'aide de ce dernier, peut être introduit dans et ressorti hors de la chambre d'irradiation, différentes sources de rayonnement gamma sont associées au canal d'irradiation pour des tâches particulières d'irradiation et une unité électronique de comptage (11) est raccordée au détecteur et un calculateur (12) est raccordé à cette unité électronique, caractérisée en ce que le calculateur (12) est programmé pour les opérations de calcul des revendications 1 et 2, qu'en avant de la chambre d'irradiation (3) est disposé un dispositif (13) de mesure de la hauteur de la section, à l'aide duquel la section du corps moulé (1) situé sur son chariot de support (10) peut être mesurée et dont le générateur (14) de valeurs de mesure de la hauteur est raccordé au calculateur (12), que ce dernier associe une source de rayon gamma (7) à chaque hauteur $x_F$ de la section, en rapport avec la mesure de cette hauteur $x_F$ de la section, en tenant compte de la densité $\rho_M$ ainsi que du coefficient d'absorption $\mu_M$ du matériau compact, et actionne de façon correspondante le commutateur (18) des sources de rayonnement gamma, qui est équipé d'un dispositif de servocommande (15), par l'intermédiaire d'un dispositif de commande (16), et qu'après la mesure de la hauteur de la section, le chariot (10) supportant le corps moulé peut être introduit, d'une manière adaptée à la section, à partir de la position de mesure, dans la chambre d'irradiation (3), sous la commande du calculateur (12), par l'intermédiaire d'un dispositif de commande (16) et d'un autre dispositif de servocommande (17).

Fig. 1

*Fig.2*